# FASCICULE DE BREVET EUROPEEN

(11) **EP 2 545 261 B1**
(45) Date de publication et mention de la délivrance du brevet: **22.06.2016**
(21) Numéro de dépôt: 11708922.7
(22) Date de dépôt: 11.02.2011
(51) Int. Cl.: F01N 3/021, F01N 3/023, F01N 9/00, F02D 41/02

(54) **PROCEDE DE REGULATION DE LA TEMPERATURE DE REGENERATION D'UN FILTRE A PARTICULES**
VERFAHREN ZUR REGELUNG DER REGENERATIONSTEMPERATUR EINES PARTIKELFILTERS
METHOD FOR REGULATING THE REGENERATION TEMPERATURE OF A PARTICULATE FILTER

(30) Priorité: 10.03.2010 FR 1051717
(43) Date de publication de la demande: 16.01.2013
(73) Titulaire: Peugeot Citroën Automobiles SA, 78140 Vélizy-Villacoublay (FR)
(72) Inventeur: COLIGNON, Christophe, F-95110 Sannois (FR)
(74) Mandataire: Renous Chan, Véronique
(86) Numéro de dépôt international: PCT/FR2011/050295
(87) Numéro de publication internationale: WO 2011/110760

(56) Documents cités:
- EP-A2- 1 582 709
- WO-A2-2006/125151
- US-A1- 2007 068 148

## Description

La présente invention concerne un procédé de régulation de la température de régénération d'un filtre à particules.

La combustion de combustible fossile comme le pétrole ou le charbon dans un système de combustion peut entraîner la production en quantité non négligeable de polluants qui peuvent être libérés dans l'atmosphère et dégrader l'environnement. C'est notamment le cas lors de la combustion du carburant par les moteurs montés dans les véhicules automobiles. On cherche à diminuer au maximum l'émission de polluants en raison des problèmes environnementaux générés.

Une technique pour traiter ces polluants consiste à ajouter un filtre à particules dans la ligne d'échappement des gaz de combustion, cette ligne comportant un catalyseur d'oxydation. Ce filtre est capable d'arrêter une forte proportion des particules engendrées par la combustion des combustibles dans le moteur. Le filtre devient cependant de moins en moins efficace au fur et à mesure que les particules s'y accumulent, car elles obturent progressivement le filtre, ce qui conduit à une perte de charge qui augmente dans le filtre, et ce qui finit par diminuer la performance du moteur. Une solution consiste à régénérer le filtre en brûlant régulièrement les particules collectées par les filtres. Durant une opération de régénération, le filtre est soumis à des températures très élevées. Ceci peut conduire à le détériorer. En conséquence, le véhicule risque de ne plus être en conformité avec la législation de dépollution. Cela est notamment connu des documents FR-A-2 876 733, US- A-2007/ 0130922, US-A-2009/0188235, US-A-2008/0269955 et US-A-2007/0214774.

Il est donc intéressant de pouvoir contrôler la température du filtre à particules au cours de la régénération.

La solution la plus efficace consiste à implanter un capteur de température en amont du filtre à particules pour que la régulation soit la plus précise possible, tout en utilisant un capteur de température en aval du catalyseur d'oxydation (qui réalise l'exotherme permettant d'atteindre les températures suffisantes). La température vue par le catalyseur d'oxydation est ainsi limitée. Mais cette dernière solution suppose l'utilisation de deux capteurs de température.

Il existe donc un besoin pour un procédé de régulation de la température de régénération d'un filtre à particules permettant de se passer d'un capteur de température en amont du filtre à particules.

On connait de plus le document US2007068148A1 un dispositif à un seul capteur de température correspondant au préambule de la revendication 1.

L'invention propose un procédé de régulation de la température de régénération d'un filtre à particules de moteur de véhicule, le moteur étant équipé d'une ligne d'échappement comportant successivement dans le sens d'écoulement des gaz :
- un catalyseur d'oxydation muni d'un capteur mesurant la température en aval du catalyseur dans le sens d'écoulement des gaz,
- un filtre à particules,
- acquisition d'une information relative au profil de roulage du véhicule,
- détermination d'une température cible pour la température en aval du catalyseur en fonction de l'information acquise,
- régénération du filtre à particules, et, au cours de la régénération, caractérisé en ce que le procédé comprend l'étape d'adaptation de la température cible en fonction de l'évolution d'une température en amont du filtre à particules qui est estimée à partir de la température mesurée par le capteur.

Selon un mode de réalisation, l'information relative au profil de roulage comprend une mesure de la vitesse du véhicule et une mesure de la charge du moteur moyennées dans le temps.

Selon encore un autre mode de réalisation, à l'étape d'adaptation, la température en amont du filtre à particules est comparée à un premier seuil selon un premier intervalle de temps prédéterminé qui dépend de l'information relative au profil de roulage.

Dans un autre exemple de réalisation, la température cible est augmentée si la température en amont du filtre à particules est inférieure au premier seuil.

En variante, la température en amont du filtre à particules n'est comparée au premier seuil qu'à partir d'une température minimale, et d'un temps maximum si la température minimale n'est pas atteinte.

Dans un autre mode de réalisation, la température cible est à nouveau augmentée si la température en amont du filtre à particules est encore inférieure au premier seuil après un deuxième intervalle de temps prédéterminé, le deuxième intervalle de temps étant supérieur au premier intervalle de temps.

Selon encore un autre mode de réalisation, à l'étape d'adaptation, lorsque la température estimée dépasse un deuxième seuil, la température cible est diminuée.

Dans un autre exemple de réalisation, à l'étape d'adaptation, lorsque la température estimée dépasse un troisième seuil, la post-injection de carburant mise en oeuvre lors de la régénération du filtre à particules est interrompue.

En variante, à l'étape d'adaptation, lorsque la post-injection de carburant est interrompue, la post-injection est reprise dès que la température estimée est inférieure au deuxième seuil.

Dans un autre mode de réalisation, l'information relative au profil de roulage comprend une prévision sur les conditions de roulage en fonction de l'historique de roulage du véhicule.

Selon encore un autre mode de réalisation, la régénération du filtre à particules est commandée par une consigne d'augmentation de la température en amont du filtre à particules, la consigne étant :
- de type échelon,
- filtrée avec un filtre du premier ordre, ou
- du type une rampe fonction du roulage.

En variante, la température cible est adaptée en outre en fonction du roulage du véhicule.

L'invention propose également un véhicule comprenant :
- un moteur
- une ligne d'échappement comportant successivement dans le sens d'écoulement des gaz :
   - d'un catalyseur d'oxydation muni d'un capteur mesurant la température en aval du catalyseur dans le sens d'écoulement des gaz,
   - d'un filtre à particules,
caractérisé en ce qu'il comprend en outre un contrôleur adapté à mettre en oeuvre un des modes de réalisation du procédé de régulation tel que décrit précédemment.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, une vue schématique d'un exemple de ligne d'échappement;
- figure 2, une vue schématique d'un autre exemple de ligne d'échappement.

L'invention se rapporte à un procédé de régulation de la température de régénération d'un filtre à particules de moteur de véhicule. Le moteur est équipé d'une ligne d'échappement comportant successivement dans le sens d'écoulement des gaz un catalyseur d'oxydation et un filtre à particules. Le catalyseur est muni d'un capteur mesurant la température en aval du catalyseur dans le sens d'écoulement des gaz. Le procédé comprend une étape d'acquisition d'une information relative au profil de roulage du véhicule. Le procédé comporte également une étape de détermination d'une température cible pour la température en aval du catalyseur en fonction de l'information acquise. Le procédé comporte en outre une étape de régénération du filtre à particules, et, au cours de la régénération, une étape d'adaptation de la température cible en fonction de l'évolution d'une température en amont du filtre à particules qui est estimée à partir de la température mesurée par le capteur en aval du catalyseur.

Le procédé est donc une stratégie permettant d'adapter la température cible en aval du catalyseur pour réguler la température amont du filtre à particules. La température amont du filtre à particules est ainsi la plus stable possible. Une telle régulation prend en compte le profil de roulage et est mise en oeuvre lorsqu'il n'y a pas de capteur de température en amont du filtre à particules et que le capteur de température le plus proche du filtre à particules est situé en aval du catalyseur d'oxydation. Le procédé de régulation proposé permet donc bien de se passer d'un capteur de température en amont du filtre à particules.

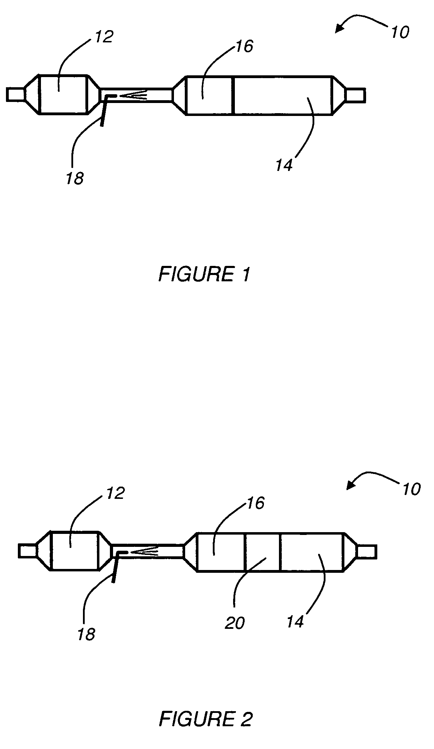

Un tel procédé est adapté à être mis en oeuvre dans tout type de véhicule. Le véhicule peut notamment être un véhicule de type Diesel ou essence. Le véhicule comporte un moteur équipé d'une ligne d'échappement. Les figures 1 et 2 illustrent des vues schématiques d'exemples de ligne d'échappement dans lesquels le procédé de régulation peut être mis en oeuvre.

Les figures 1 et 2 illustrent des vues schématiques d'exemples de ligne d'échappement dans lesquels le procédé de régulation peut être mis en oeuvre. Selon l'exemple de la figure 1, la ligne 10 d'échappement comporte successivement dans le sens d'écoulement des gaz un catalyseur 12 d'oxydation et un filtre 14 à particules. Le catalyseur 12 est muni d'un capteur mesurant la température en aval du catalyseur dans le sens d'écoulement des gaz. Le capteur n'est pas représenté sur la figure. La ligne 10 comprend en outre un dispositif 16 SCR placé entre le catalyseur 12 et le filtre 14. Un dispositif SCR ou catalyseur SCR est un dispositif effectuant la réduction catalytique des NOₓ sélective. La ligne 10 est en outre munie d'un injecteur 18 d'ammoniac. L'injection d'ammoniac par l'injecteur 18 a lieu entre le catalyseur 12 et le dispositif 16. Selon l'exemple de la figure 2, la ligne 10 comporte un autre catalyseur 20 d'oxydation placé entre le dispositif 16 SCR et le filtre 14.

Le véhicule comprend en outre un contrôleur adapté à mettre en oeuvre un procédé de régulation tel que décrit dans la suite. Le contrôleur peut notamment comprendre un calculateur moteur.

Le procédé de régulation de la température de régénération d'un filtre 14 à particules de moteur de véhicule comprend une étape d'acquisition d'une information relative au profil de roulage du véhicule.

L'information relative au profil de roulage peut comprendre une mesure de la vitesse du véhicule et une mesure de la charge du moteur. Une telle information présente l'avantage d'être facile à acquérir car des capteurs mesurant la vitesse et la charge sont déjà présents sur le véhicule.

En outre, les mesures peuvent être moyennées dans le temps. Une moyenne dans le temps peut par exemple être mise en oeuvre pour les mesures réalisées dans un intervalle typique de 30 secondes ou de 1 minute. Cela permet de rendre l'information moins « volatile » c'est-à-dire plus précise.

Il serait aussi envisageable de prendre en compte une information relative au profil de roulage telle que celle utilisée par les boîtes de vitesses automatiques auto-adaptatives.

L'information relative au profil de roulage peut également comporter une prévision sur les conditions de roulage en fonction de l'historique de roulage du véhicule.

Le profil de roulage permet de donner accès au débit de gaz d'échappement.

Une étape de détermination d'une température cible pour la température en aval du catalyseur 12 en fonction de l'information acquise fait également partie du procédé. Dans la suite, la température cible est notée T_{cible}. Ainsi, la température cible T_{cible} peut être donnée par une courbe en fonction de l'information relative au profil de roulage acquise. La température cible acquise à cette étape est la température cible acquise en début de la demande de régénération. Il s'agit donc de la température cible initiale notée dans la suite T_{cible_init}.

Dans le cas où l'information relative au profil de roulage comporte une prévision sur les conditions de roulage, la température cible T_{cible} peut être corrigée de façon additive. Les conditions de roulage à venir peuvent être issues d'un module à long terme contenu dans le calculateur et connaissant l'historique de roulage du véhicule. Une telle correction additive de la température cible T_{cible} en fonction du profil de roulage à long terme peut être variée entre deux profils extrêmes. Ainsi, pour un utilisateur qui ne fait que du roulage ville sévère, la correction apportée à la température cible T_{cible} est nulle. Au contraire, pour un roulage sur autoroute, la correction apportée à la température cible est maximale. Pour un profil de roulage intermédiaire, la correction apportée sera intermédiaire. Cela permet de mieux adapter la température cible T_{cible} au profil de roulage habituel du véhicule.

Le procédé comporte en outre une étape de régénération du filtre 14 à particules. La régénération du filtre 14 à particules peut notamment être mise en oeuvre par une ou plusieurs post-injection(s) de carburant.

La régénération du filtre 14 à particules peut en outre être commandée par une consigne d'augmentation de la température en amont du filtre 14 à particules en début de régénération. L'augmentation de la température en amont du filtre 14 à particule peut notamment être de type échelon. Une telle consigne présente l'avantage d'être facile à mettre en oeuvre.

La consigne peut aussi être filtrée avec un filtre du premier ordre. Il est aussi possible d'envisager une consigne du type rampe. Cela permet de laisser la ligne 10 d'échappement monter en température sans risquer un dépassement (correspondant au terme « overshoot » en anglais) de température au niveau du catalyseur 12. Le catalyseur 12 est ainsi mieux protégé.

Pour améliorer encore une telle protection dans le cas d'une consigne de type rampe, la rampe peut être fonction du roulage. La prise en compte du roulage au moment du déclenchement de la régénération permet d'éviter encore mieux le risque de dépassement de température au niveau du catalyseur 12.

Le procédé comprend une étape d'adaptation de la température cible en fonction de l'évolution d'une température en amont du filtre 14 à particules. L'évolution de la température en amont du filtre 14 à particules est estimée à partir de la température mesurée par le capteur mesurant la température en aval du catalyseur 12. Il est en effet possible d'implanter dans le calculateur du contrôleur un modèle de ligne d'échappement qui prédit la température en amont du filtre 14 à particules à partir de la mesure de la température aval du catalyseur 12 d'oxydation. L'étape d'adaptation a lieu au cours de la régénération.

Le procédé permet de réguler la température en amont du filtre 14 à particules en utilisant un capteur de température en amont du catalyseur 12 mais sans utiliser de capteur de température en amont du filtre 14 à particules. Le procédé permet de se passer d'un capteur de température ce qui diminue le coût du véhicule. Le procédé repose sur la constatation que les pertes thermiques entre la sortie du catalyseur 12 et l'entrée du filtre 14 à particules varient très fortement en fonction du profil de roulage. Par exemple, pour une température de 530°C en amont du filtre 14 à particules, la température cible s'élève à 650°C en ville sévère (10 km/h de moyenne), 630°C en ville (20 km/h de moyenne), 610°C sur route et 600°C sur autoroute. C'est pourquoi la prise en compte de l'information relative au profil de roulage dans la détermination de la température cible permet d'effectuer une bonne régulation de la température du filtre 14 à particules.

En effet, ce procédé de régulation octroie une meilleure qualité de régulation qu'une régulation basée sur une estimation de la température amont du filtre 14 à particules ne donnant pas de bons résultats.

En outre, le procédé proposé permet également une meilleure régulation qu'un système cartographié. La stratégie de régénération d'un filtre 14 à particules consiste en une augmentation de la thermique moteur par une calibration moteur spécifique (sous-calage des injections, vannage à l'admission et éventuellement une ou plusieurs post-injections) et une augmentation de la charge du moteur grâce à l'enclenchement de consommateurs électriques du véhicule. Le système de détermination du débit et du phasage de la post-injection est cartographié en fonction du régime et de la charge du moteur. Outre le fait que ce système est sensible aux dispersions entre moteurs, un tel système n'est en effet pas adapté puisque le système est optimal pour certains profils de roulage mais pas pour d'autres. Ainsi, si la cartographie est optimisée pour permettre d'atteindre les bons niveaux thermiques sur les profils les plus roulants, les températures seront insuffisantes pour régénérer en ville. A contrario, si la cartographie est optimisée pour permettre d'atteindre les bons niveaux thermiques sur les profils les moins roulants, les températures seront trop élevées pour le catalyseur 12 d'oxydation pour les profils rapides. Cela peut aboutir à un vieillissement prématuré ce qui augmente le risque de ne plus satisfaire aux niveaux d'émissions réglementaires. La capacité à faire monter la température (exotherme) peut en outre être dégradée dans de telles conditions. La température peut également être trop élevée pour le filtre 14 à particules et en cas de surcharge en particules, il existe un fort risque d'endommagement du filtre 14. Enfin, la cartographie peut être optimisée pour permettre d'atteindre les bons niveaux thermiques sur un profil moyennement roulant ce qui est un compromis entre les deux réglages précédents. Les températures sont alors insuffisantes pour régénérer le filtre 14 en roulage critique (ville sévère) et trop élevées sur autoroute ou roulage très chargé (montée de col...).

Cet avantage en terme de performance de régulation du procédé par rapport à une régulation basée sur une estimation de la température amont du filtre 14 à particules ou un système de cartographie est particulièrement sensible pour les véhicules ayant un dispositif SCR placé en amont du filtre 14 à particules. C'est notamment le cas des exemples de lignes 10 d'échappement des figures 1 et 2. En effet, en présence du dispositif SCR, le contrôle de la température de régénération du filtre 14 à particules devient problématique puisque la température va être très fortement influencée par l'inertie de la ligne d'échappement. La longueur des tubes, la taille du dispositif SCR et la présence potentielle d'isolation sont autant de paramètres qui influencent l'inertie de la ligne d'échappement.

Le gain économique dû à l'absence de capteur de température et les bonnes performances de régulation s'accompagnent d'un gain sur la durée de la régénération du filtre 14 à particules. Le raccourcissement de la durée de la régénération entraîne un gain en dilution de gazole dans l'huile ainsi qu'un gain en consommation. Le procédé permet en effet d'obtenir une meilleure efficacité énergétique.

Plusieurs mises en oeuvre de l'étape d'adaptation peuvent être envisagées. Ces mises en oeuvre peuvent de manière avantageuse être combinées entre elles.

Notamment, à l'étape d'adaptation, il est possible de corriger la température cible T_{cible} en cas de chauffage trop lent du filtre 14 à particules. Pour cela, la température en amont du filtre 14 à particules peut être comparée à un premier seuil S1 selon un premier intervalle de temps prédéterminé ΔT1. Cela signifie que la comparaison est effectuée à chaque fois que le premier intervalle de temps s'est écoulé. Il y a ainsi un rebouclage « régulier » qui permet de bien contrôler l'évolution du chauffage du filtre 14 à particules.

Le premier intervalle de temps peut être calibrable. Notamment, cet intervalle de temps peut dépendre de l'information relative au profil de roulage. Cela permet de laisser le temps pour les différents organes de la ligne 10 de monter en température à basse vitesse.

Pour obtenir un effet similaire, il est également possible que la température en amont filtre 14 à particules ne soit comparée au premier seuil S1 qu'à partir d'une température minimale Tmin, et d'un temps maximum tmax si la température minimale Tmin n'est pas atteinte. L'utilisation d'un temps maximum permet de reboucler même dans le cas où la montée en température est trop lente.

La température cible T_{cible} peut être augmentée si la température en amont du filtre 14 à particules est inférieure au premier seuil S1. Cela permet d'assurer que le filtre 14 à particules atteigne la température adéquate pour assurer une bonne régénération. L'augmentation de la température cible peut en particulier être réalisée via une courbe fonction de la température cible initiale T_{cible_init}.

A l'étape d'adaptation, la température cible T_{cible} est à nouveau augmentée si la température en amont du filtre 14 à particules est encore inférieure au premier seuil S1 après un deuxième intervalle de temps prédéterminé ΔT2. Le deuxième intervalle de temps ΔT2 est supérieur au premier intervalle de temps ΔT1. Cela permet d'assurer que le filtre 14 à particules atteigne la température adéquate pour assurer une bonne régénération.

Le deuxième intervalle de temps ΔT2 peut comme le premier intervalle de temps ΔT1 être calibrable. En outre, l'augmentation de la température cible T_{cible} peut en particulier être réalisée via une courbe fonction de la température cible initiale T_{cible_init}.

Il est aussi possible à l'étape d'adaptation de corriger la température cible T_{cible} en cas de chauffage trop rapide du filtre 14 à particules. Ainsi, lorsque la température estimée dépasse un deuxième seuil S2, la température cible T_{cible} est diminuée. Un tel abaissement de la température cible T_{cible} peut être mis en oeuvre via une courbe fonction de la température cible initiale. Cela permet d'éviter un chauffage trop important du filtre 14 à particules qui pourrait endommager ou réduire la durée de vie du filtre 14 à particules.

Pour améliorer encore la sécurité du filtre 14 à particules, il est possible d'utiliser un troisième seuil S3 de température. Lorsque la température estimée dépasse le troisième seuil S3, la post-injection de carburant mise en oeuvre lors de la régénération du filtre 14 à particules est alors interrompue.

Lorsque la post-injection de carburant est interrompue, la post-injection est reprise dès que la température estimée est inférieure au deuxième seuil S2. La température du filtre 14 est ainsi limitée à une température inférieure au deuxième S2. De ce fait, cela évite que le filtre 14 ne soit exposé à des températures trop importantes pouvant réduire sa durée de vie ou l'endommager.

De plus, si le seuil de température S3 est différent du seuil S2, il est avantageusement fait usage d'un hystérésis en température. Les "rebonds" sont en effet évités.

La température cible T_{cible} peut en outre être adaptée en fonction du roulage du véhicule. Notamment, il est possible d'adapter la température cible en fonction du critère de roulage actuel par rapport au critère de roulage au déclenchement de la régénération. En effet, sur certains profils d'utilisation, l'information relative au roulage du véhicule varie beaucoup. C'est le cas par exemple d'un profil qui mélange roulage en ville sévère et roulage sur autoroute. Le système n'est alors pas assez réactif. La température cible prend ainsi mieux en compte le roulage du véhicule ce qui permet de mieux réguler la température du filtre 14.

## Revendications

1. Un procédé de régulation de la température de régénération d'un filtre (14) à particules de moteur de véhicule, le moteur étant équipé d'une ligne (10) d'échappement comportant successivement dans le sens d'écoulement des gaz :
- un catalyseur (12) d'oxydation muni d'un capteur mesurant la température en aval du catalyseur (12) dans le sens d'écoulement des gaz,
- un filtre (14) à particules,
- acquisition d'une information relative au profil de roulage du véhicule,
- détermination d'une température cible (T_{cible}) pour la température en aval du catalyseur (12) en fonction de l'information acquise,
- régénération du filtre (14) à particules, et, au cours de la régénération, **caractérisé en ce que** le procédé comprend l'étape d'adaptation de la température cible (T_{cible}) en fonction de l'évolution d'une température en amont du filtre (14) à particules qui est estimée à partir de la température mesurée par le capteur.

2. Le procédé selon la revendication 2, **caractérisé en ce que** l'information relative au profil de roulage comprend une mesure de la vitesse du véhicule et une mesure de la charge du moteur moyennées dans le temps.

3. Le procédé selon l'une des revendications 1 ou 2, **caractérisé en ce que** à l'étape d'adaptation, la température en amont du filtre (14) à particules est comparée à un premier seuil (S1) selon un premier intervalle de temps prédéterminé (ΔT1) qui dépend de l'information relative au profil de roulage.

4. Le procédé selon la revendication 3, **caractérisé en ce que** la température cible (T_{cible}) est augmentée si la température en amont du filtre (14) à particules est inférieure au premier seuil (S1).

5. Le procédé selon l'une des revendications 3 ou 4, **caractérisé en ce que** la température en amont du filtre (14) à particules n'est comparée au premier seuil (S1) qu'à partir d'une température minimale, et d'un temps maximum si la température minimale n'est pas atteinte.

6. Le procédé selon la revendication 4, **caractérisé en ce que** la température cible (T_{cible}) est à nouveau augmentée si la température en amont du filtre (14) à particules est encore inférieure au premier seuil (S1) après un deuxième intervalle de temps prédéterminé (ΔT2), le deuxième intervalle de temps (ΔT2) étant supérieur au premier intervalle de temps (ΔT1).

7. Le procédé selon l'une des revendications 1 à 6, **caractérisé en ce que** à l'étape d'adaptation, lorsque la température estimée dépasse un deuxième seuil (S2), la température cible (T_{cible}) est diminuée.

8. Le procédé selon la revendication 7, **caractérisé en ce que** à l'étape d'adaptation, lorsque la température estimée dépasse un troisième seuil (S3), la post-injection de carburant mise en oeuvre lors de la régénération du filtre (14) à particules est interrompue.

9. Le procédé selon la revendication 8, **caractérisé en ce que** à l'étape d'adaptation, lorsque la post-injection de carburant est interrompue, la post-injection est reprise dès que la température estimée est inférieure au deuxième seuil (S2).

10. Le procédé selon l'une des revendications 1 à 9, **caractérisé en ce que** l'information relative au profil de roulage comprend une prévision sur les conditions de roulage en fonction de l'historique de roulage du véhicule.

11. Le procédé selon l'une des revendications 1 à 10, **caractérisé en ce que** la régénération du filtre (14) à particules est commandée par une consigne d'augmentation de la température en amont du filtre (14) à particules, la consigne étant :
- de type échelon,
- filtrée avec un filtre du premier ordre, ou
- du type une rampe fonction du roulage.

12. Le procédé selon l'une des revendications 1 à 11, **caractérisé en ce que** la température cible (T_{cible}) est adaptée en outre en fonction du roulage du véhicule.

13. Un véhicule comprenant :
- un moteur
- une ligne (10) d'échappement comportant successivement dans le sens d'écoulement des gaz :
- d'un catalyseur (12) d'oxydation muni d'un capteur mesurant la température en aval du catalyseur (12) dans le sens d'écoulement des gaz,
- d'un filtre (14) à particules,
**caractérisé en ce qu'**il comprend en outre un contrôleur adapté à mettre en oeuvre le procédé de régulation selon l'une des revendications 1 à 12.

## Patentansprüche

1. Verfahren zur Regelung der Regenerationstemperatur eines Partikelfilters (14) eines Fahrzeugmotors, wobei der Motor mit einem Auspuffstrang (10) ausgestattet ist, der nacheinander in die Strömungsrichtung der Gase Folgendes umfasst:
- einen Oxidationskatalysator (12), der mit einem Sensor versehen ist, der die Temperatur stromabwärts des Katalysators (12) in die Strömungsrichtung der Gase misst,
- ein Partikelfilter (14),
- Erfassung einer Information in Zusammenhang mit dem Fahrprofil des Fahrzeugs,
- Bestimmen einer Zieltemperatur (T_{cible}) für die Temperatur stromabwärts des Katalysators (12) in Abhängigkeit von der erfassten Information,
- Regeneration des Partikelfilters (14) und im Laufe der Regeneration
**dadurch gekennzeichnet, dass** das Verfahren den Schritt des Anpassens der Zieltemperatur (T_{cible}) in Abhängigkeit von der Entwicklung einer Temperatur stromaufwärts des Partikelfilters (14), die ausgehend von der von dem Sensor gemessenen Temperatur geschätzt wird, umfasst.

2. Verfahren nach Anspruch 2, **dadurch gekennzeichnet, dass** die Information in Zusammenhang mit dem Fahrprofil eine Messung der Geschwindigkeit des Fahrzeugs und eine Messung der Last des Motors über die Zeit gemittelt umfasst.

3. Verfahren nach einem der Ansprüche 1 oder 2, **dadurch gekennzeichnet, dass** beim Anpassungsschritt die Temperatur stromaufwärts des Partikelfilters (14) mit einem ersten Schwellenwert (S1) gemäß einem ersten vorbestimmten Zeitintervall (ΔT1), das von der Information in Zusammenhang mit dem Fahrprofil abhängt, verglichen wird.

4. Verfahren nach Anspruch 3, **dadurch gekennzeichnet, dass** die Zieltemperatur (T_{cible}) erhöht wird, wenn die Temperatur stromaufwärts des Partikelfilters (14) niedriger ist als der erste Schwellenwert (S1).

5. Verfahren nach einem der Ansprüche 3 oder 4, **dadurch gekennzeichnet, dass** die Temperatur stromaufwärts des Partikelfilters (14) mit dem ersten Schwellenwert (S1) erst ab einer Mindesttemperatur und einer maximalen Zeit, falls die Mindesttemperatur nicht erreicht wird, verglichen wird.

6. Verfahren nach Anspruch 4, **dadurch gekennzeichnet, dass** die Zieltemperatur (T_{cible}) erneut erhöht wird, falls die Temperatur stromaufwärts des Partikelfilters (14) nach einem zweiten vorbestimmten Zeitintervall (ΔT2) immer noch niedriger ist als der erste Schwellenwert (S1), wobei das zweite Zeitintervall (ΔT2) größer ist als das erste Zeitintervall (ΔT1).

7. Verfahren nach einem der Ansprüche 1 bis 6, **dadurch gekennzeichnet, dass** bei dem Anpassungsschritt, wenn die geschätzte Temperatur einen zweiten Schwellenwert (S2) überschreitet, die Zieltemperatur (T_{cible}) verringert wird.

8. Verfahren nach Anspruch 7, **dadurch gekennzeichnet, dass** bei dem Anpassungsschritt, wenn die geschätzte Temperatur einen dritten Schwellenwert (S3) überschreitet, die Kraftstoffnacheinspritzung, die bei der Regeneration des Partikelfilters (14) umgesetzt wird, unterbrochen wird.

9. Verfahren nach Anspruch 8, **dadurch gekennzeichnet, dass** bei dem Anpassungsschritt, wenn die Kraftstoffnacheinspritzung unterbrochen wird, die Kraftstoffnacheinspritzung wieder aufgenommen wird, sobald die geschätzte Temperatur niedriger ist als der zweite Schwellenwert (S2).

10. Verfahren nach einem der Ansprüche 1 bis 9, **dadurch gekennzeichnet, dass** die Information in Zusammenhang mit dem Fahrprofil eine Vorhersage der Fahrbedingungen in Abhängigkeit von der Fahrhistorie des Fahrzeugs umfasst.

11. Verfahren nach einem der Ansprüche 1 bis 10, **dadurch gekennzeichnet, dass** die Regeneration des Partikelfilters (14) von einer Erhöhungsanweisung der Temperatur stromaufwärts des Partikelfilters (14) gesteuert wird, wobei die Erhöhungsanweisung:
- vom Stufentyp ist,
- mit einem Filter erster Ordnung gefiltert wird, oder
- des Typs einer Rampe in Abhängigkeit von dem Fahren ist.

12. Verfahren nach einem der Ansprüche 1 bis 11, **dadurch gekennzeichnet, dass** die Zieltemperatur (T_{cible}) außerdem in Abhängigkeit von dem Fahren des Fahrzeugs angepasst wird.

13. Fahrzeug, das Folgendes umfasst:
- einen Motor,
- einen Auspuffstrang (10), der nacheinander in die Strömungsrichtung der Gase Folgendes umfasst:
- einen Oxidationskatalysator (12), der mit einem Sensor versehen ist, der die Temperatur stromabwärts des Katalysators (12) in die Strömungsrichtung der Gase misst,
- ein Partikelfilter (14),
**dadurch gekennzeichnet, dass** es außerdem eine Steuerung umfasst, die angepasst ist, um das Verfahren zur Regelung nach einem der Ansprüche 1 bis 12 umzusetzen.

## Claims

1. A method for regulating the regeneration temperature of a particulate filter (14) for a vehicle engine, said engine being equipped with an exhaust line (10) comprising successively in the direction of flow of the gases:
- an oxidation catalyst (12) provided with a sensor that measures the temperature downstream of the catalyst (12) in the direction of flow of the gases,
- a particulate filter (14),
- acquiring information relating to the running profile of the vehicle,
- determining a target temperature (T_{target}) for the temperature downstream of the catalyst (12) as a function of the information acquired,
- regenerating the particulate filter (14), and, during the regeneration,
**characterized in that** the method includes the step of adapting the target temperature (T_{target}) as a function of the development of a temperature upstream of the particulate filter (14), which is estimated from the temperature measured by the sensor.

2. The method according to Claim 2, **characterized in that** the information relating to the running profile includes a measurement of the speed of the vehicle and a measurement of the charge of the engine averaged over time.

3. The method according to one of Claims 1 or 2, **characterized in that** at the adaptation step, the temperature upstream of the particulate filter (14) is compared to a first threshold (S1) according to a first predetermined time interval (ΔT1) which depends on the information relating to the running profile.

4. The method according to Claim 3, **characterized in that** the target temperature (T_{target}) is increased if the temperature upstream of the particulate filter (14) is less than the first threshold (S1).

5. The method according to one of Claims 3 or 4, **characterized in that** the temperature upstream of the particulate filter (14) is only compared to the first threshold (S1) from a minimum temperature, and a maximum time if the minimum temperature is not reached.

6. The method according to Claim 4, **characterized in that** the target temperature (T_{target}) is increased again if the temperature upstream of the particulate filter (14) is still less than the first threshold (S1) after a second predetermined time interval (ΔT2), the second time interval (ΔT2) being greater than the first time interval (ΔT1).

7. The method according to one of Claims 1 to 6, **characterized in that** at the adaptation step, when the estimated temperature exceeds a second threshold (S2), the target temperature (T_{target}) is reduced.

8. The method according to Claim 7, **characterized in that** at the adaptation step, when the estimated temperature exceeds a third threshold (S3), the post-injection of fuel implemented during the regeneration of the particulate filter (14) is interrupted.

9. The method according to Claim 8, **characterized in that** at the adaptation step, when the post-injection of fuel is interrupted, the post-injection is resumed as soon as the estimated temperature if less than the second threshold (S2).

10. The method according to one of Claims 1 to 9, **characterized in that** the information relating to the running profile includes a forecast of the running conditions as a function of the running history of the vehicle.

11. The method according to one of Claims 1 to 10, **characterized in that** the regeneration of the particulate filter (14) is controlled by a setpoint of temperature increase upstream of the particulate filter (14), the setpoint being:
- of the increment type,
- filtered with a first-order filter, or
- of the type with a ramp as a function of running.

12. The method according to one of Claims 1 to 11, **characterized in that** the target temperature (T_{target}) is adapted in addition as a function of the running of the vehicle.

13. A vehicle including:
- an engine,
- an exhaust line (10) comprising successively in the direction of flow of the gases:
- an oxidation catalyst (12) provided with a sensor measuring the temperature downstream of the catalyst (12) in the direction of flow of the gases,
- a particulate filter (14),
**characterized in that** it includes in addition a controller adapted to implement the regulating method according to one of Claims 1 to 12.
